# EUROPEAN PATENT APPLICATION

(11) **EP 4 730 294 A1**
(43) Date of publication of application: **22.04.2026**
(21) Application number: 25201851.0
(22) Date of filing: 12.09.2025
(51) Int. Cl.: G08B 17/12, G08B 29/18

(54) **FLAME DETECTION SYSTEM AND METHOD THEREOF**

(30) Priority: 16.10.2024 IN 202411078626
(71) Applicant: Life Safety Distribution GmbH, 1180 Rolle (CH)
(72) Inventor: RAMANA, Akula Venkata, Charlotte, 28202 (US)
(74) Representative: Haseltine Lake Kempner LLP

(57) **Abstract**

A flame detection system comprising at least one flame detector to detect one or more radiations within a field of view (FOV) and at least one analog-to-digital converter to convert one or more signals corresponding to the detected one or more radiations into one or more analog to digital converted (ADC) signals. Further, at least one processor is configured to receive the ADC signals corresponding to the one or more radiations detected and determine a plurality of threshold conditions for a reflected flare stack associated with the one or more ADC signals. The at least one processor is configured to determine a parameter associated with the one or more ADC signals, compare the parameter with each of the plurality of threshold conditions and to determine whether the one or more ADC signals are indicative of a flame or a reflected flare stack based at least on the comparison.

## Description

### TECHNOLOGICAL FIELD

Example embodiments of the present disclosure generally relates to a flame detection system, and more particularly relates to a flame detection system for determining a false alarm during flame detection.

### BACKGROUND

Flame detectors are safety devices designed to identify flame generated due to combustion of different fuel sources in various industries including oil and gas, chemical processing, and manufacturing. However, false alarms pose significant challenges to the efficiency and effectiveness of the flame detectors. The false alarms result in unnecessary downtime, costly maintenance, and operational inefficiencies. Further, the flame detectors often struggle to differentiate between real fire incidents and false triggers caused by environmental factors such as arc welding, reflected sunlight, LED or halogen lamps, heaters, and reflected flare stacks. The flame detectors equipped with advanced false alarm handling capabilities can effectively differentiate between various sources of false alarms. However, distinguishing between reflected flare stacks and actual flames remains a challenge. The wavelength and intensities of flare reflections closely resemble those of real flames, making it difficult for existing flame detectors to accurately discern between the two.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY OF THE INVENTION

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In an example embodiment, a flame detection system is disclosed. The flame detection system comprises at least one flame detector configured to detect one or more radiations within a field of view (FOV). Further, at least one analog-to-digital converter is configured to convert one or more signals corresponding to the detected one or more radiations into one or more analog to digital converted (ADC) signals. Further, at least one processor is operationally coupled to the at least one flame detector. The at least one processor is configured to receive the one or more ADC signals from the at least one flame detector. Further, the at least one processor is configured to determine a plurality of threshold conditions, for a reflected flare stack, associated with the one or more ADC signals. Furthermore, the at least one processor is configured to determine a parameter associated with the one or more ADC signals. The parameter is determined based at least on spectral density and frequency domain ratios. Further, the at least one processor is configured to compare the parameter with the plurality of threshold conditions for the one or more ADC signals, wherein the parameter satisfies the plurality of threshold conditions. Thereafter, the at least one processor is configured to determine whether the one or more ADC signals are indicative of a flame or a reflected flare based at least on the comparison.

In some embodiments, the parameter corresponds to at least a skewness and kurtosis ratio (SK ratio) of the one or more ADC signals. In some embodiments, the at least one processor is configured to compare the skewness and kurtosis ratio with the plurality of threshold conditions using a Kolmogorov-Smirnov Test.

In some embodiments, the at least one processor is configured to compare the parameter with each of the plurality of threshold conditions for the one or more ADC signals to determine whether the parameter associated with the one or more ADC signals satisfies each of the plurality of threshold conditions determined. Further, the at least one processor is configured to determine whether the one or more ADC signals are indicative of a flame upon determining that the parameter associated with the one or more ADC signals does not satisfy the plurality of threshold conditions determined. Further, the at least one processor is configured to determine whether the one or more ADC signals are indicative of a reflected flare upon determining that the parameter associated with the one or more ADC signals satisfies each of the plurality of threshold conditions determined.

In some embodiments, the at least one processor is configured to determine the plurality of threshold conditions associated with the one or more ADC signals based at least on a flag condition associated with the one or more ADC signals. Further, the flag condition corresponds to the one or more ADC signals received by the at least one processor having one or more fluctuations and modulations within a period of time.

In some embodiments, the at least one processor is configured to generate a signal in response to a determination that the one or more ADC signals are indicative of the flame and transmit the signal to a communication device for alerting a user.

In some embodiments, the at least one flame detector comprises at least one of infrared (IR) sensors, photodiodes, or a combination of the IR sensors and the photodiodes.

In another example embodiment, a method is disclosed. The method comprises the steps of receiving, via at least one processor, one or more analog to digital converter (ADC) signals corresponding to one or more radiations detected within a field of view (FOV) of at least one flame detector; determining, via the at least one processor, a plurality of threshold conditions, for a reflected flare stack, associated with the one or more ADC signals; determining, via the at least one processor, a parameter associated with the one or more ADC signals, wherein the parameter is determined based at least on spectral density, and frequency domain ratios; comparing, via the at least one processor, the parameter with the plurality of threshold conditions for the one or more ADC signals, wherein the parameter satisfies the plurality of threshold conditions; and determining, via the at least one processor, whether the one or more ADC signals are indicative of a flame or a reflected flare based at least on the comparison.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a flame detection system, in accordance with an example embodiment of the present disclosure;
FIG. 2 illustrates a graphical representation of a spectrum of one or more radiations, in accordance with an example embodiment of the present disclosure;
FIG. 3 illustrates a pictorial representation of a field of view (FOV) of at least one flame detector, in accordance with an example embodiment of the present disclosure;
FIG. 4 illustrates an exemplary scenario of the flame detection system, in accordance with an example embodiment of the present disclosure;
FIG. 5 illustrates a table showing a plurality of threshold conditions, in accordance with an example embodiment of the present disclosure;
FIGS. 6A-6B illustrate a table showing validation results of the flame detection system, in accordance with an example embodiment of the present disclosure; and
FIG. 7 illustrates a flowchart showing a method for flame detection, in accordance with an example embodiment of the present disclosure.

### DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a flame detection system and a method thereof. Embodiments may comprise at least one flame detector. Embodiments may be configured to detect one or more radiations within a field of view (FOV). Embodiments may comprise at least one analog-to-digital converter configured to convert one or more signals corresponding to the detected one or more radiations into one or more analog to digital converted (ADC) signals. Embodiments may comprise at least one processor operationally coupled to the at least one flame detector. Embodiments may be configured to receive the one or more ADC signals from the at least one flame detector. Embodiments may be configured to determine a plurality of threshold conditions, for a reflected flare stack, associated with the one or more ADC signals. Embodiments may be configured to determine a parameter associated with the one or more ADC signals. Embodiments may be configured to compare the parameter with the plurality of threshold conditions for the one or more ADC signals, wherein the parameter satisfies the plurality of threshold conditions. Embodiments may be configured to determine whether the one or more ADC signals are indicative of a flame or a reflected flare based at least on the comparison.

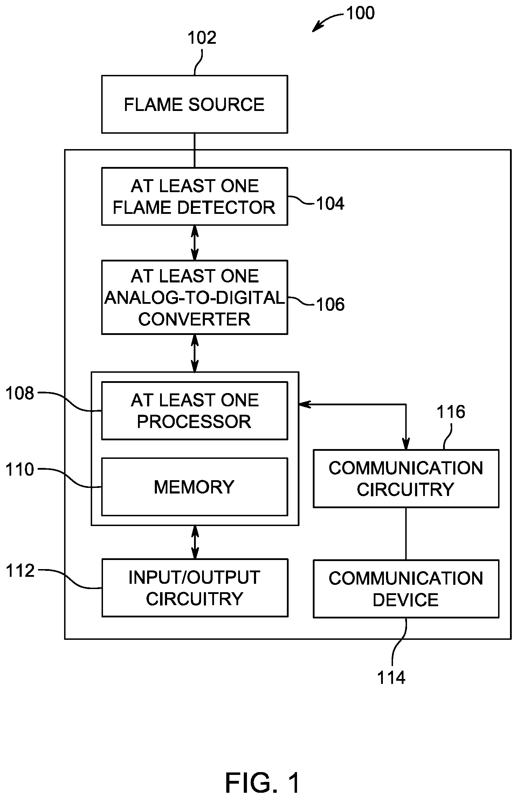

FIG. 1 illustrates a block diagram of a flame detection system 100, in accordance with an example embodiment of the present disclosure.

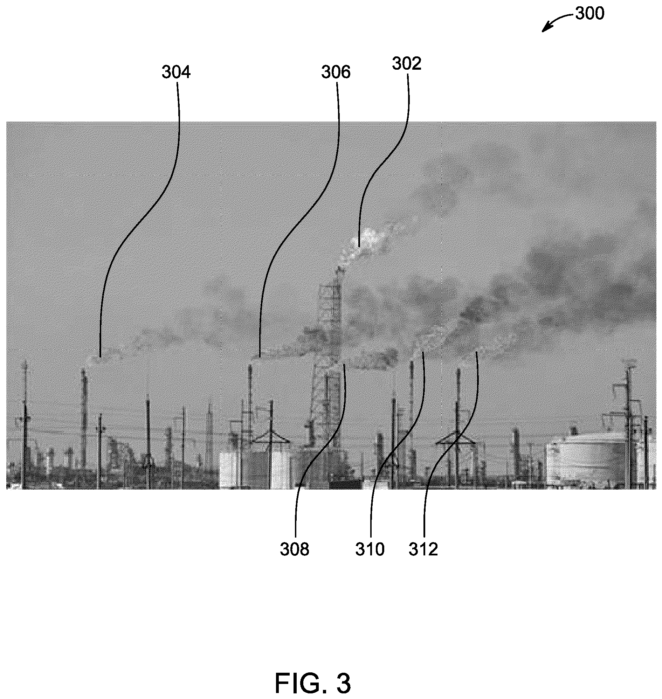

The flame detection system 100 may comprise at least one flame detector 104, an analog to digital converter 106, at least one processor 108, a memory 110, an input/output circuitry 112, a communication device 114 and a communication circuitry 116. In some embodiments, the at least one flame detector 104 may be configured to detect one or more radiations within a field of view (FOV) 300 (shown in FIG. 3). The one or more radiations may be emitted from a flame source 102 within the FOV 300. In some embodiments, the flame source 102 may correspond to at least a hydrogen gas, a hydrocarbon gas, a methane gas, or other combustible fuel sources. In some embodiments, the flame source 102 may emit the one or more radiations during combustion. Further, the one or more radiations may be detected in a form of one or more infrared (IR) signals, one or more light signals, or one or more heat signals.

In some embodiments, the at least one flame detector 104 may be configured to detect the one or more radiations within the FOV 300 and convert the detected one or more radiations into one or more analog to digital converted (ADC) signals. In one example, the at least one flame detector 104 comprises at least one of infrared (IR) sensors, photodiodes, or a combination of the IR sensors and the photodiodes. In some embodiments, the IR sensors and the photodiodes may be configured to capture the one or more radiations. In some embodiments, the IR sensors and the photodiodes may be configured to capture the one or more radiations in the form of one or more analog signals. Further, the at least one flame detector 104 may be fabricated with one or more active and passive electronic components that may enable the at least one flame detector 104 to detect the one or more radiations.

In some embodiments, the at least one flame detector 104 may be integrated with an analog to digital converter (ADC) 106. In some embodiments, the ADC may be configured to convert the one or more analog signals corresponding to the one or more radiations, into one or more digital signals. Further, the one or more digital signals may also be referred as one or more ADC signals, such as one or more ADC counts. In some embodiments, the at least one flame detector 104 may be operationally coupled with the at least one processor 108 such that the ADC may be configured to feed the one or more ADC signals to the at least one processor 108.

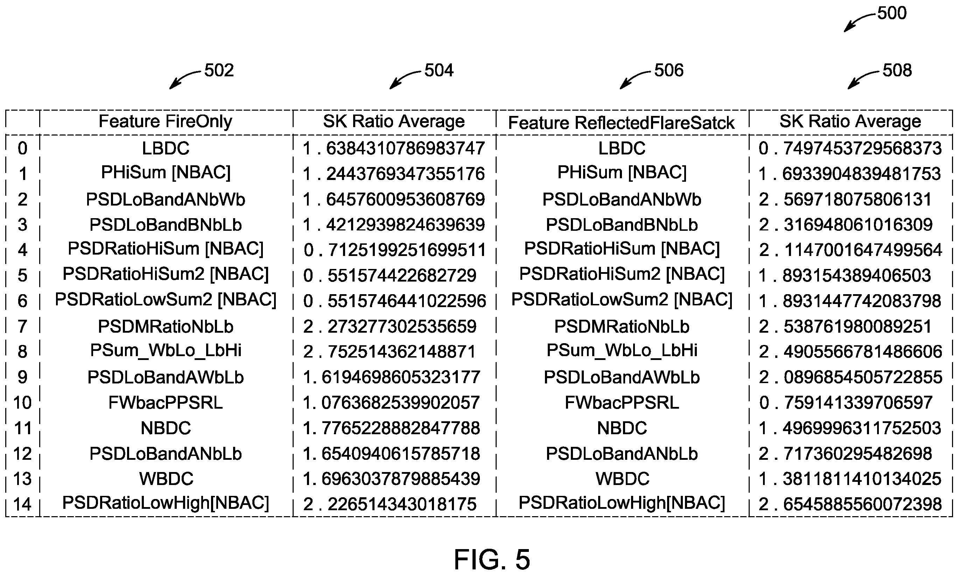

In some embodiments, the at least one processor 108 may be configured to receive the one or more ADC signals from the at least one flame detector 104. Further, the at least one processor 108 may be configured to determine a plurality of threshold conditions, for a reflected flare stack, associated with the one or more ADC signals. The threshold conditions correspond to specific threshold conditions tailored for a flame and reflected flare represented as one or more columns as a feature fire only 502, SK ratio average 504 for the feature fire only 502, feature reflected flare stack 506, and SK ratio average 508 for the feature reflected flare stack 506 (as shown in FIG.5). In some embodiments, the threshold conditions may be calculated using the Kolmogorov-Smirnov test (K-S test) and p-value test. In an example, if the p-value is less than the significance level (alpha), then the K-S statistic is considered as the threshold condition for one or more features of the flame and reflected flare. Further, the at least one processor 108 may be configured to determine a parameter associated with the one or more ADC signals. The parameter may be determined based at least on spectral density and frequency domain ratios. In some embodiments, the parameter may correspond to at least a skewness and kurtosis ratio (SK ratio) of the one or more ADC signals.

In an example, the frequency domain ratios being derived from the one or more ADC signals (e.g., one or more ADC signals of WB, LB and NB of AC/DC) include PSDLoBandAWbLb: ratio of Power Spectral Density (PSD), sum of low band [2~5Hz] of wideband signal (WBAC) over the power spectral density sum of low band [2~5Hz] of narrowband signal (LBAC). In some embodiments, power spectral density (PSD) is a measure of power of the one or more ADC signals distribution across different frequencies. In some embodiments, WBAC typically refers to the one or more ADC signals that contains a broad range of frequencies. In some embodiments, LBAC refers to the one or more ADC signals that is limited to a narrower frequency range.

In some embodiments, the sum of low band (Sum of PSD over 2~5Hz) corresponds to summing up the PSD values over a specific frequency range, in this case, the range may be 2 to 5 Hz. The sum of low band focuses on the low-frequency components of the signal. In some embodiments, ratio of PSD sum of low band of WBAC over PSD sum of low band of LBAC compares the power content in the low-frequency range of the wideband signal to that of the narrowband signal. The numerator involves calculating the sum of the PSD values in the low-frequency range for the wideband signal. The denominator involves calculating the sum of the PSD values in the same low-frequency range for the narrowband signal.

In some embodiments, the at least one processor 108 may be configured to compare the parameter with each of the plurality of threshold conditions for the one or more ADC signals. Further, the at least one processor 108 may be configured to compare the skewness and kurtosis ratio with the plurality of threshold conditions using a Kolmogorov-Smirnov Test. In some embodiments, distribution of the skewness and kurtosis ratio may be compared for various frequency domain features between the flame and reflected flare scenarios using the Kolmogorov-Smirnov test (K-S test). The K-S test is used to compare the distributions of two samples. The K-S test checks whether the distributions of the Skewness/Kurtosis Ratios for each feature significantly differ between the flame and reflected flare scenarios. Further, a significance level (alpha) that is set to 0.01 may be defined. The significance level means that if the p-value from the K-S test is less than 0.01, then the difference between the distributions is considered statistically significant. In an example, the outcome may correspond to: Feature: PSA_LbLo_LbHi, K-S Statistic: 0.09, P-Value: 0.0, means Test is Significant (Distributions differ); Feature: PSA WbLo_LbHi, K-S Statistic: 0.14, P-Value: 0.0 means Test is Significant (Distributions differ).

In some embodiments, the at least one processor 108 may be configured to determine whether the one or more ADC signals are indicative of a flame or reflected flare based at least on the comparison. In some embodiments, the at least one processor 108 may be configured to train the ML model based at least on the plurality of threshold conditions extracted from the one or more ADC signals over a period of time. Further, the at least one processor 108 may be configured to deploy the trained ML model for determining the flame or reflected flare. The trained ML model may comprise aggregated simulation of a plurality of models that are trained by the at least one processor 108 over a period of time.

In some embodiments, the at least one processor 108 may be configured to determine the plurality of threshold conditions associated with the one or more ADC signals based at least on a flag condition associated with the one or more ADC signals. In some embodiments, the threshold conditions may be calculated using the Kolmogorov-Smirnov test (K-S test) and p-value test. In an example, if the p-value is less than the significance level (alpha), then the K-S statistic is considered as the threshold condition for one or more features of the flame and reflected flare. In some embodiments, the at least one processor 108 may be configured to employ the flag conditions based on the one or more ADC signals received by the at least one processor 108 having one or more fluctuations and modulations within a period of time.

The at least one processor 108 may be configured to detect fluctuations or modulation of the plurality of threshold conditions determined from the one or more ADC signals to determine whether the one or more ADC signals are indicative of the flame as the fire, the intentional flame, or the reflected flare. In some embodiments, the at least one processor 108 may be configured to generate a signal in response to that the determined one or more ADC signals that are indicative of the flame. Thereafter, the at least one processor 108 may be configured to transmit the signal to the communication device 114 for alerting a user. In some embodiments, the at least one processor 108 may transmit the signal to the communication device 114 through the input/output circuitry 112 and the communication circuitry 116.

In some embodiments, the at least one processor 108 may include suitable logic, circuitry, and/or interfaces that are operable to execute one or more instructions stored in the memory 110 to perform predetermined operations. In one embodiment, the at least one processor 108 may be configured to decode and execute any instructions received from one or more other electronic devices or server(s). The at least one processor 108 may be configured to execute one or more computer-readable program instructions, such as program instructions to carry out any of the functions described in this description. Further, the at least one processor 108 may be implemented using one or more processor technologies known in the art. Examples of the at least one processor 108 include, but are not limited to, one or more general purpose processors (e.g., INTEL^{®} or Advanced Micro Devices^{®} (AMD) microprocessors) and/or one or more special purpose processors (e.g., digital signal processors or Xilinx^{®} System On Chip (SOC) Field Programmable Gate Array (FPGA) processor).

In some embodiments, the at least one processor 108 via the ML model may validate and test the plurality of threshold conditions by comparing the plurality of threshold conditions with a plurality of scenarios based on the one or more ADC signals over a period of time. Further, the plurality of scenarios may correspond to instances of flame generated from a different flame source 102 and reflection of flare. Further, the at least one processor 108 via the trained ML model may be configured to generate one or more results based at least on the validation and tests of the plurality of characteristics. In some embodiments, the one or more results may indicate between the flame, or the reflected flare. In some embodiments, the results of the validation and tests may be saved within the memory 110. Further, in some embodiments, the at least one processor 108 may be configured to train the ML model based at least on the plurality of threshold conditions extracted from the one or more ADC signals over a period of time. Further, the at least one processor 108 may be configured to deploy the trained ML model for determining the flame or the reflected flare.

In some embodiments, the memory 110 may be configured to store a set of instructions and data executed by the at least one processor 108. The memory 110 may include the one or more instructions that are executable by the at least one processor 108 to perform specific operations. It is apparent to a skilled artisan that the one or more instructions stored in the memory 110 enable the hardware of the flame detection system 100 to perform the predetermined operations. Some of the commonly known memory 110 implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

In some embodiments, the flame detection system 100 may comprise the input/output circuitry 112. The input/output circuitry 112 may enable the one or more users to communicate or interface with the at least one processor 108, via the communication device 114. In some embodiments, the input/output circuitry 112 may act as a medium to transmit input from the communication device 114 to and from the flame detection system 100. In some embodiments, the input/output circuitry 112 may refer to the hardware and software components that facilitate the exchange of information between the user and the flame detection system 100. The input/output circuitry 112 may include various input devices such as keyboards, barcode scanners, and graphical user interfaces (GUI) for the user to provide data and various output devices such as an alarm unit for alerting a user in case the one or more ADC signals are indicative of the flame. In one example, the communication circuitry 116 may include N number of user devices. In some embodiments, the communication circuitry 116 may include a graphical user interface (GUI) (not shown) as input circuitry to allow the user to input data. In some embodiments, the communication circuitry 116 may comprise at least one of one or more mobile phones, laptops, or the like for generating notification alert or sound alert for the user.

In some embodiments, the at least one processor 108 may further comprise the communication circuitry 116. The communication circuitry 116 may allow the at least one processor 108 to exchange data or information with other systems or apparatuses. Further, the communication circuitry 116 may include network interfaces, protocols, and software modules responsible for sending and receiving data or information. In some embodiments, the communication circuitry 116 may include Ethernet ports, Wi-Fi adapters, or communication protocols like HTTP or MQTT for connecting with other systems. The communication circuitry 116 may further include components such as communication modules (e.g., Wi-Fi, Ethernet, cellular), transceivers, antennas, and protocols (e.g., TCP/IP, MQTT, SNMP) for exchanging data with other systems or network devices. The communication circuitry 116 may allow the at least one processor 108 to stay up-to-date and accurately determine whether the one or more ADC signals are indicative of the flame or the reflected flare.

It will be apparent to one skilled in the art that above-mentioned components of the flame detection system 100 have been provided only for illustration purposes, without departing from the scope of the disclosure.

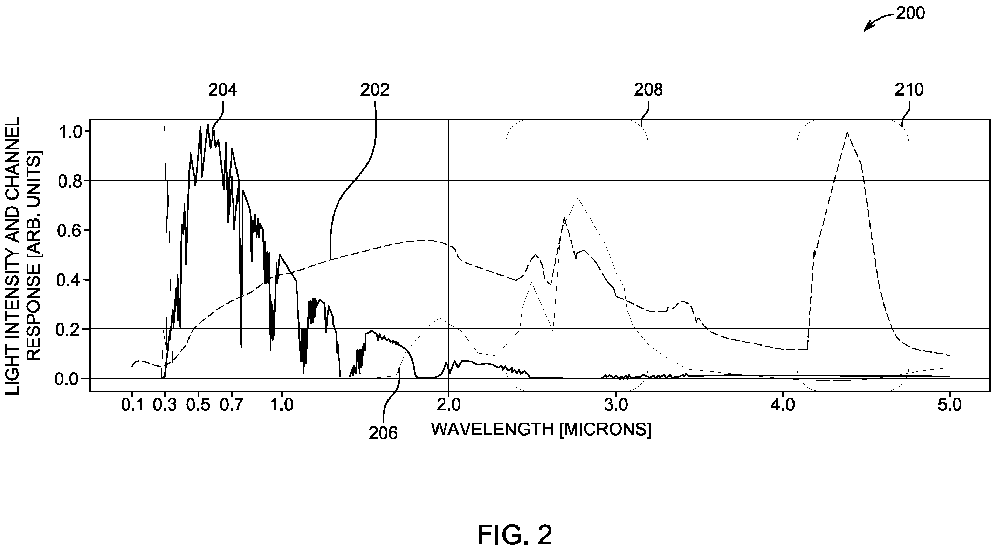

FIG. 2 illustrates a graphical representation of a spectrum 200 of one or more radiations, in accordance with an example embodiment of the present disclosure.

As described in FIG. 1, the at least one flame detector 104 may be configured to detect the one or more radiations. The one or more radiations may be detected in a form of electromagnetic signals. In some embodiments, the one or more electromagnetic signals may correspond to one or more electrical signals. In some embodiments, the one or more electromagnetic signals may possess different wavelength. A graphical representation of the spectrum 200 of the one or more radiations emitted from the flame source 102 is illustrated in FIG. 2. The graphical representation may represent the spectrum 200 of wavelength of the one or more radiations emitted by the flame source 102. Further, the spectrum 200 may include the wavelengths corresponding to ultraviolet C (UVC) range (0.1 - 0.3 microns), visual range (0.3 - 0.7 microns), wide band range (0.7-4.5 microns) and long band range (3.0-5.0 microns).

In one example embodiment, the spectrum 200 may comprise wavelength (in microns) of the one or more radiations emitted due to a combustion of ethylene, as illustrated by 202. Further, the spectrum 200 may comprise wavelength of the one or more radiations emitted due to sunlight, as illustrated by 204. In another example embodiment, the spectrum 200 may comprise wavelength of the one or more radiations emitted due to combustion of hydrogen gas, as illustrated by 206. In some embodiments, the spectrum 200 represents plurality of peaks around different range of wavelength. In an example, the peaks in the range of wavelength depicted by 208 corresponds to water emission peaks indicating the hydrogen flame. Further, the peaks in the range of wavelength depicted by 210 corresponds to carbon dioxide emission peaks indicating the hydrocarbons (HC) flame. In some embodiments, it may be apparent from the spectrum 200 that wavelengths and intensities of flare reflections closely resemble those of real flames, making it difficult for the at least one flame detector 104 to accurately discern between the two.

In some embodiments, the at least one flame detector 104 may be configured to detect the one or more radiations in the form of analog signals. Further, the one or more radiations may correspond to one or more electromagnetic radiations in the infrared (IR), visible light and ultraviolet (UV) wavelengths. Further, wavelength of the one or more radiations depends upon the type of fuel source. Further, the at least one processor 108 operationally coupled to the at least one flame detector 104 may process the one or more radiations as the one or more ADC signals. Further, the at least one processor 108 may be configured to determine whether the one or more ADC signals are indicative of the real flame or reflected flare based on various comparisons between the parameters (a skewness and kurtosis ratio (SK ratio) threshold of the one or more ADC signals) and the plurality of threshold conditions.

FIG. 3 illustrates a pictorial representation of a field of view (FOV) 300 of at least one flame detector 104, in accordance with an example embodiment of the present disclosure.

In some embodiments, the FOV 300 may correspond to an area in which the at least one flame detector 104 may detect the one or more radiations. The FOV 300 of the at least one flame detector 104 may further refer to the angular extent of an area from which the at least one flame detector 104 receives one or more radiations. The FOV 300 of the at least one flame detector 104 may determine the spatial range over which the at least one flame detector 104 may capture one or more radiations that are converted into the one or more ADC signals. Further, the one or more ADC signals may be received by the at least one processor 108 and compared against the plurality of predefined threshold conditions specific to reflected flare stacks. In one example, the FOV 300 may comprise one or more flames as fires such as a first fire 302, a second fire 304, a third fire 306, a fourth fire 308, a fifth fire 310, and a sixth fire 312. The at least one flame detector 104 may detect one or more radiations form the first fire 302, the second fire 304, the third fire 306, the fourth fire 308, the fifth fire 310, and the sixth fire 312. The FOV 300 may ensure that the at least one flame detector 104 captures one or more radiations effectively from within a designated area, allowing the trained ML model to make accurate determinations whether the one or more ADC signals correspond to a real flame or a reflected flare.

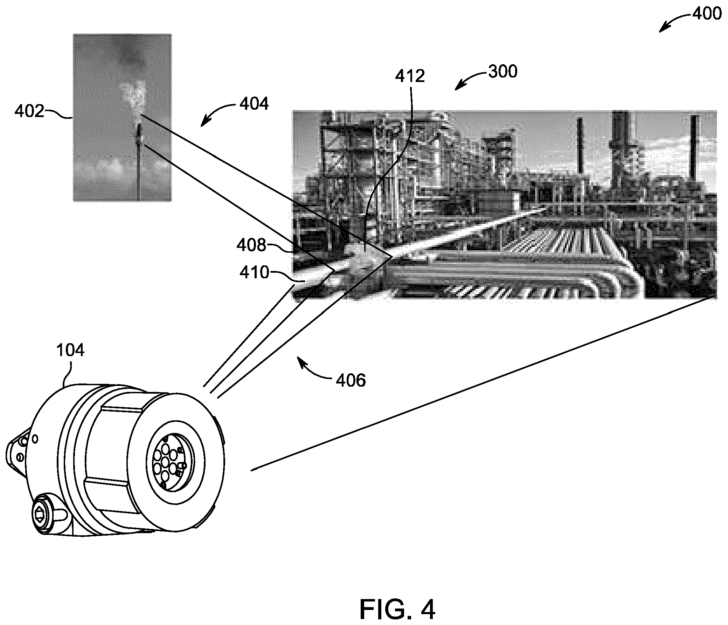

FIG. 4 illustrates an exemplary scenario 400 of the flame detection system 100, in accordance with an example embodiment of the present disclosure.

In some embodiments, the flame detection system 100 may comprise the at least one flame detector 104. In the exemplary scenario 400, a flame zone 402 may emit one or more radiations 404. Further, the at least one flame detector 104 may detect another one or more radiations 406 from a monitoring zone 408 within the FOV 300. The one or more radiations 404 from the flame zone 402 may be reflected by an object 410 present in the monitoring zone. For example, the one or more radiations 404 from the flame zone 402 may be reflected from the object 410 that is a high gloss object, such as steel pipe that is used in many industrial plants. The at least one flame detector 104 may detect the one or more radiations 404 reflected by the object 410. Further, the at least one analog to digital converter 106 may convert signals from the flame detector 104 corresponding to the one or more radiations 404 into one or more ADC signals.

In some embodiments, the at least one processor 108 may receive the one or more ADC signals. Further, the at least one processor 108 may determine the plurality of threshold conditions, for a reflected flare stack 412, associated with the one or more ADC signals. In some embodiments, the threshold conditions may include one or more features tailored for the flame and the reflected flare stack for example as shown in FIG. 5 feature fire only 502, SK ratio average 504 for the feature fire only 502, feature reflected flare stack 506, and SK ratio average 508 for the feature reflected flare stack 506. The feature fire only 502 may represent a plurality of threshold conditions specifically tailored for identifying characteristics associated with detection of the flame. The SK ratio average 504 may compute the average spectral-SK ratio pertinent to fire-related features, providing a baseline for comparison. The feature reflected flare stack 506 may correspond to a plurality of threshold conditions aimed at distinguishing one or more radiations indicative of the reflected flare stack. The SK ratio average 508 may compute the average SK ratio relevant to characteristics of the reflected flare stacks, enabling comparison against the plurality of predefined thresholds.

Furthermore, in some embodiments, the at least one processor 108 may be configured to determine the parameter associated with the one or more ADC signals. The parameter may be determined based at least on spectral density and frequency domain ratios. In some embodiments, the parameter may correspond to at least a skewness and kurtosis ratio (SK ratio) of the one or more ADC signals. Further, the at least one processor 108 may be configured to compare the parameter associated with the one or more ADC signals with the plurality of threshold conditions for the one or more ADC signals. Based on the comparison, the at least one processor 108 may determine the one or more radiations are the one or more radiations 404 of the flame zone 402 that are reflected by the object 202 within the monitoring zone 408. Thereafter, the at least one processor 108 may determine that the one or more ADC signals are indicative of the reflected flare stack 412, based at least on the comparison using the trained ML model. For example, an analyzed radiation having a SK ratio of 2.1149 above the threshold condition of 2.1147 may indicate that the one or more radiations correspond to the reflected flare stack 412.

FIG. 5 illustrates a table 500 showing the plurality of threshold conditions, in accordance with an example embodiment of the present disclosure.

In some embodiments, the table 500 represents the plurality of threshold conditions that are determined by the at least one processor 108. The table 500 comprises the plurality of threshold conditions for a flame and reflected flare stack represented as one or more columns as a feature fire only 502, SK ratio average 504 for the feature fire only 502, feature reflected flare stack 506, and SK ratio average 508 for the feature reflected flare stack 506. The feature fire only 502 may represent a plurality of threshold conditions specifically tailored for identifying characteristics associated with detection of the flame. The SK ratio average 504 may compute the average spectral-SK ratio pertinent to fire-related features, providing a baseline for comparison. The feature reflected flare stack 506 may correspond to a plurality of threshold conditions aimed at distinguishing one or more radiations indicative of the reflected flare stack. The SK ratio average 508 may compute the average SK ratio relevant to characteristics of the reflected flare stacks, enabling comparison against the plurality of predefined thresholds.

In one example, the table 500 may comprise the feature fire only 502 as "LBDC", the SK ratio average 504 as "1.6384310786983747", the feature reflected flare stack 506 as LBDC", and the SK ratio average 508 as "0.7497453729568373". In another example, the table 500 may comprise the feature fire only 502 as "PHiSum [NBAC]", the SK ratio average 504 as "1.2443769347355176", the feature reflected flare stack 506 as "PHiSum [NBAC]", and the SK ratio average 508 as "1.6933904839481753". In yet another example, the table 500 may comprise the feature fire only 502 as "PSDLoBandANbWb", the SK ratio average 504 as "1.6457600953608769", the feature reflectedflarestack 506 as "PSDLoBandANbWb", and the SK ratio average 508 as "2.569718075806131".

In another example, the table 500 may comprise the feature fire only 502 as "PSDLoBandBNbLb", the SK ratio average 504 as "1.4212939824639639", the feature reflectedflarestack 506 as "PSDLoBandBNbLb", and the SK ratio average 508 as "2.316948061016309". In yet another example, the table 500 may comprise the feature fire only 502 as "PSDRatioHiSum[NBAC]", the SK ratio average 504 as "0.7125199251699511", the feature reflectedflarestack 506 as "PSDRatioHiSum[NBAC]", and the SK ratio average 508 as "2.1147001647499564".

In another example, the table 500 may comprise the feature fire only 502 as "PSDRatioHiSum2 [NBAC]", the SK ratio average 504 as "0.551574422682729", the feature reflected flare stack 506 as "PSDRatioHiSum2 [NBAC]", and the SK ratio average 508 as "1.893154389406503". In yet another example, the table 500 may comprise the feature fire only 502 as "PSDRatioLowSum2 [NBAC]", the SK ratio average 504 as "0.5515746441022596", the feature reflected flare stack 506 as "PSDRatioLowSum2 [NBAC]", and the SK ratio average 508 as "1.8931447742083798".

In another example, the table 500 may comprise the feature fire only 502 as "PSDMRatioNbLb", the SK ratio average 504 as "2.273277302535659", the feature reflected flare stack 506 as "PSDMRatioNbLb", and the SK ratio average 508 as "2.538761980089251". In yet another example, the table 500 may comprise the feature fire only 502 as "PSum_WbLo_LbHi", the SK ratio average 504 as "2.752514362148871", the feature reflected flare stack 506 as "PSum_WbLo_LbHi", and the SK ratio average 508 as "2.4905566781486606".

In another example, the table 500 may comprise the feature fire only 502 as "PSDLoBandAWbLb", the SK ratio average 504 as "1.6194698605323177", the feature reflected flare stack 506 as "PSDLoBandAWbLb", and the SK ratio average 508 as "2.0896854505722855". In yet another example, the table 500 may comprise the feature fire only 502 as "FWbacPPSRL", the SK ratio average 504 as "1.0763682539902057", the feature reflected flare stack 506 as "FWbacPPSRL", and the SK ratio average 508 as "0.759141339706597".

In another example, the table 500 may comprise the feature fire only 502 as "NBDC", the SK ratio average 504 as "1.7765228882847788", the feature reflected flare stack 506 as "NBDC", and the SK ratio average 508 as "1.4969996311752503". In yet another example, the table 500 may comprise the feature fire only 502 as "PSDLoBandANbLb", the SK ratio average 504 as "1.6540940615785718", the feature reflected flare stack 506 as "PSDLoBandANbLb", and the SK ratio average 508 as "2.717360295482698".

In another example, the table 500 may comprise the feature fire only 502 as "WBDC", the SK ratio average 504 as "1.6963037879885439", the feature reflected flare stack 506 as "WBDC", and the SK ratio average 508 as "1.3811811410134025". In yet another example, the table 500 may comprise the feature fire only 502 as "PSDRatioLowHigh[NBAC]", the SK ratio average 504 as "2.226514343018175", the feature reflected flare stack 506 as "PSDRatioLowHigh [NBAC]", and the SK ratio average 508 as "2.6545885560072398".

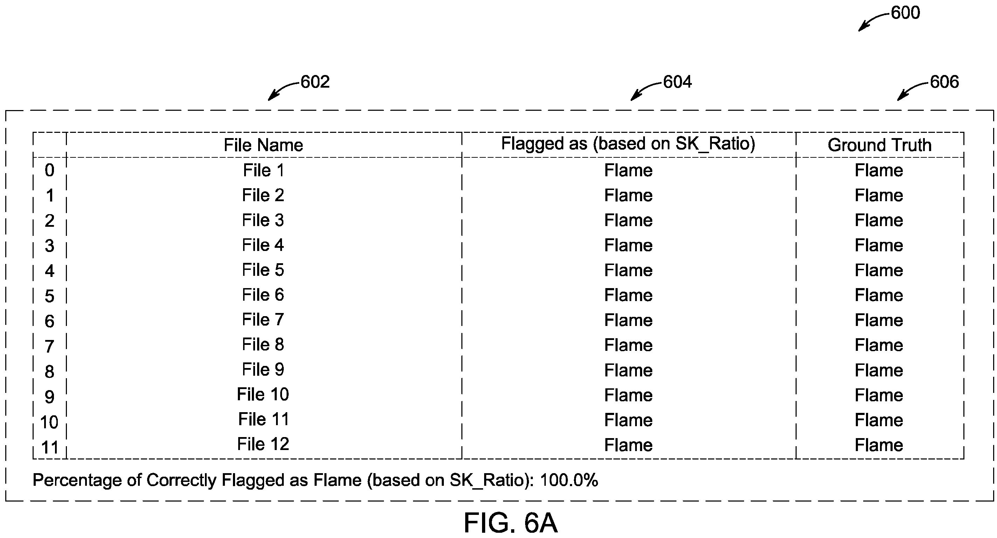

FIG. 6A-6B a table 600, 608 showing validation results of the flame detection system 100 in accordance with an example embodiment of the present disclosure. FIGS. 6A-6B are described in conjunction with FIGS. 1-5.

Referring to FIG. 6A, the table 600 may represent the validation results obtained by deployment of the trained ML model. In one example, the table 600 may comprise the validation results for one or more files comprising data related to fire, represented as "flame", in the one or more radiations of different industrial sites. The table 600 may comprise the validation results represented as one or more columns as a file name 602, "flagged as (based on SK-Ratio)" 604, and ground truth 606. The file name 602 may identify specific files or datasets containing data on one or more radiations, collected from various industrial sites, each intended to be analyzed for signals related to fire ("flame"). The "flagged as (based on SK-Ratio)" 604 may indicate classification output of the trained ML model, denoting whether each file was flagged as containing fire based on SK-Ratio. The classification output may provide insights into ability of the trained ML model to detect potential fires within the dataset. The ground truth 606 may provide actual ground truth or known outcomes for comparison, verifying the accuracy of the classification output of the trained ML model against known fire occurrences.

In one example, the table 600 may comprise the file name 602 as "File 1", the "flagged as (based on SK-Ratio)" 604 as "Flame", and the ground truth 606 as "Flame". In another example, the table 600 may comprise the file name 602 as "File 2", the "flagged as (based on SK-Ratio)" 604 as "Flame", and the ground truth 606 as "Flame". In yet another example, the table 600 may comprise the file name 602 as "File 3", the "flagged as (based on SK-Ratio)" 604 as "Flame", and the ground truth 606 as "Flame". In another example, the table 600 may comprise the file name 602 as "File 4", the "flagged as (based on SK-Ratio)" 604 as "Flame", and the ground truth 606 as "Flame".

In yet another example, the table 600 may comprise the file name 602 as "File 5", the "flagged as (based on SK-Ratio)" 604 as "Flame", and the ground truth 606 as "Flame". In another example, the table 600 may comprise the file name 602 as "File 6", the "flagged as (based on SK-Ratio)" 604 as "Flame", and the ground truth 606 as "Flame". In yet another example, the table 600 may comprise the file name 602 as "File 7", the "flagged as (based on SK-Ratio)" 604 as "Flame", and the ground truth 606 as "Flame". In another example, the table 600 may comprise the file name 602 as "File 8", the "flagged as (based on SK-Ratio)" 604 as "Flame", and the ground truth 606 as "Flame".

In yet another example, the table 600 may comprise the file name 602 as "File 9", the "flagged as (based on SK-Ratio)" 604 as "Flame", and the ground truth 606 as "Flame". In another example, the table 600 may comprise the file name 602 as "File 10", the "flagged as (based on SK-Ratio)" 604 as "Flame", and the ground truth 606 as "Flame". In yet another example, the table 600 may comprise the file name 602 as "File 11", the "flagged as (based on SK-Ratio)" 604 as "Flame", and the ground truth 606 as "Flame". In another example, the table 600 may comprise the file name 602 as "File 12", the "flagged as (based on SK-Ratio)" 604 as "Flame", and the ground truth 606 as "Flame".

Further, based on the classification outcomes of the File 1 to File 12, all the file name 602 are flagged as "Flame" that is same as the ground truth 606 "Flame". As a result, percentage (%) of correctly "flagged as flame (Based on SK_Ratio)" is 100.0%.

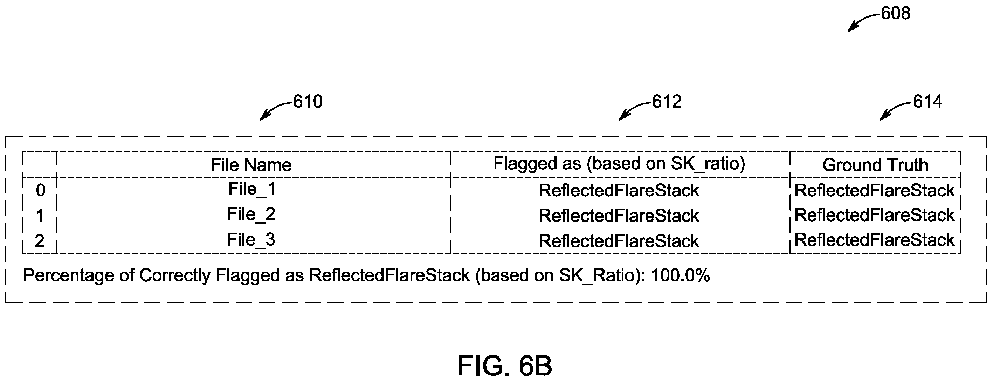

Referring to FIG. 6B, the table 608 may represent the validation results obtained by deployment of the trained ML model. In one example, the table 608 may comprise the validation results for one or more files comprising data related to reflected flare stack, represented as "reflectedflarestack", in the one or more radiations of different industrial sites. The table 608 may comprise the validation results represented as one or more columns as a file name 610, "flagged as (based on SK-Ratio)" 612, and ground truth 614. The file name 610 may identify specific files or datasets containing data on one or more radiations, collected from various industrial sites, each intended to be analyzed for signals related to reflected flare stack ("reflectedflarestack"). The "flagged as (based on SK-Ratio)" 612 may indicate classification output of the trained ML model, denoting whether each file was flagged as containing reflected flare stack, based on SK-Ratio. The classification output may provide insights into ability of the trained ML model to detect the reflected flare stacks within the dataset. The ground truth 614 may provide actual ground truth or known outcomes for comparison, verifying the accuracy of the classification output of the trained ML model against known reflected flare stack occurrences.

In one example, the table 608 may comprise the file name 610 as "File_1", the "flagged as (based on SK-Ratio)" 612 as "ReflectedFlareStack", and the ground truth 614 as "ReflectedFlareStack". In another example, the table 608 may comprise the file name 610 as "File_2", the "flagged as (based on SK-Ratio)" 612 as "ReflectedFlareStack", and the ground truth 614 as "ReflectedFlareStack". In yet another example, the table 608 may comprise the file name 610 as "File_3", the "flagged as (based on SK-Ratio)" 612 as "ReflectedFlareStack", and the ground truth 614 as "ReflectedFlareStack".

Further, based on the classification outcomes of the File_1 to File_3, all the file name 602 are flagged as "ReflectedFlareStack" that is same as the ground truth 606 "ReflectedFlareStack". As a result, percentage (%) of correctly "flagged as ReflectedFlareStack (Based on SK_Ratio)" is 100.0%.

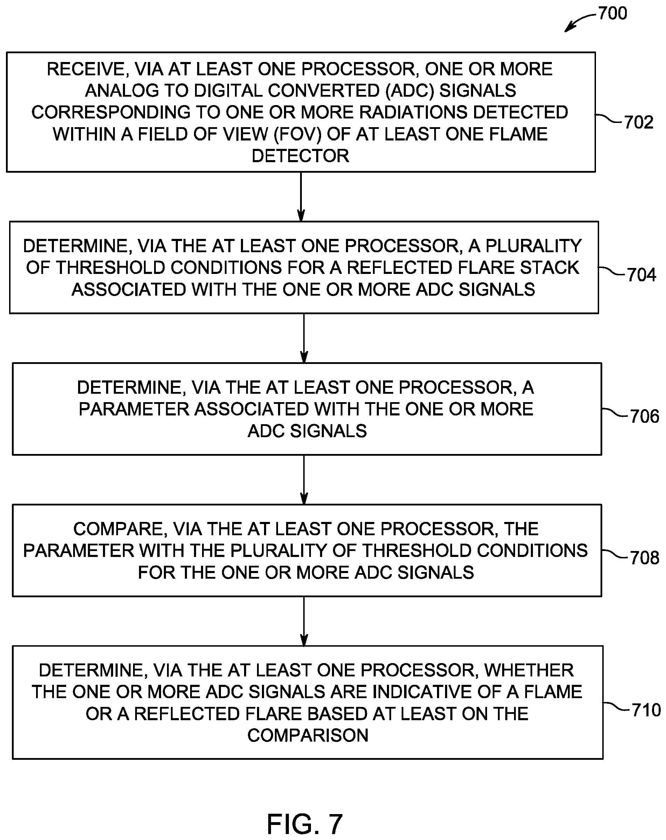

FIG. 7 illustrates a flowchart of a method 700 for flame detection, in accordance with an example embodiment of the present disclosure.

At operation 702, the at least one processor 108 may be configured to receive, via at least one processor 108, one or more analog to digital converted (ADC) signals corresponding to one or more radiations detected within a field of view (FOV) of at least one flame detector. In some embodiments, the at least one flame detector 104 may comprise at least one of the IR sensors, the photodiodes, or the combination of the IR sensors and the photodiodes. In some embodiments, the at least one processor 108 may receive one or more analog to digital converted (ADC) signals from the at least one analog-to-digital converter 106.

At operation 704, the at least one processor 108 may be configured to determine the plurality of threshold conditions, for the reflected flare stack, associated with the one or more ADC signals. In some embodiments, the at least one processor 108 may be configured to extract the plurality of threshold conditions within the low frequency range and the high frequency range of the flame, or the reflected flare.

At operation 706, the at least one processor 108 may be configured to determine the parameter associated with the one or more ADC signals. The parameter may be determined based at least on the spectral density, and the frequency domain ratios. In some embodiments, the parameter may correspond to at least the SK ratio of the one or more ADC signals.

At operation 708, the at least one processor 108 may be configured to compare the parameter with the plurality of threshold conditions for the one or more ADC signals. The parameter may satisfy the plurality of threshold conditions. In some embodiments, the at least one processor 108 may be configured to compare the skewness and kurtosis ratio with the plurality of threshold conditions using the Kolmogorov-Smirnov Test.

At operation 710, the at least one processor 108 may be configured to determine whether the one or more ADC signals are indicative of the flame or the reflected flare based at least on the comparison. In some embodiments, the at least one processor 108 may be configured to detect fluctuations or modulation of the plurality of threshold conditions determined from the one or more ADC signals to determine whether the one or more ADC signals are indicative of the flame, or the reflected flare. In some embodiments, the trained ML model may comprise aggregated simulation of the plurality of models that are trained by the at least one processor 108 over the period of time.

In some embodiments, the method 700 may further comprise training, via the at least one processor 108, the ML model based at least on the plurality of threshold conditions extracted from the one or more ADC signals over a period of time. Thereafter, the method 700 may further comprise deploying, via the at least one processor 108, the trained ML model for determining the flame, or the reflected flare.

In some embodiments, the method 700 may further comprise generating, via the at least one processor 108, the signal in response to the determination that the one or more ADC signals are indicative of the flame. Thereafter, the method 700 may comprise transmitting, via the at least one processor 108, the signal to the communication circuitry 116 for alerting the user.

Embodiments of the present disclosure may enhance detection accuracy by converting radiations in the field of view into precise ADC signals, ensuring reliable data acquisition. By establishing multiple threshold conditions specifically tailored for reflected flare stacks, the flame detection system may effectively discriminate between genuine fire occurrences and benign reflections, minimizing false alarms. Further, the determination of parameters such as spectral density and frequency domain ratios may add robustness to the analysis, providing deeper insights into the nature of detected signals. Leveraging a trained ML model may enhance classification capabilities, enabling the flame detection system to distinguish between actual fires, intentional flames, and reflected flare stacks with high accuracy. The integration of the above features into a unified framework may optimize operational efficiency and reliability of flame detection systems in diverse environmental conditions, thereby enhancing overall safety and reducing unnecessary interruptions.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A flame detection system comprising:
at least one flame detector configured to detect one or more radiations within a field of view (FOV);
at least one analog-to-digital converter configured to convert one or more signals corresponding to the detected one or more radiations into one or more analog to digital converted (ADC) signals; and
at least one processor operationally coupled to the at least one flame detector, the at least one processor is configured to:
receive the one or more ADC signals from the at least one analog-to-digital converter;
determine a plurality of threshold conditions for a reflected flare stack associated with the one or more ADC signals;
determine a parameter associated with the one or more ADC signals;
compare the parameter with each of the plurality of threshold conditions for the one or more ADC signals; and
determine whether the one or more ADC signals are indicative of a flame or a reflected flare based at least on the comparison.

2. The flame detection system of claim 1, wherein the parameter corresponds to a skewness and kurtosis ratio (SK ratio) threshold of the one or more ADC signals.

3. The flame detection system of claim 2, wherein the at least one processor is configured to compare the skewness and kurtosis ratio with each of the plurality of threshold conditions using a Kolmogorov-Smirnov Test.

4. The flame detection system of claim 1, wherein the at least one processor is configured to compare the parameter with each of the plurality of threshold conditions for the one or more ADC signals to determine whether the parameter associated with the one or more ADC signals satisfies each of the plurality of threshold conditions determined.

5. The flame detection system of claim 4, wherein the at least one processor is configured to determine whether the one or more ADC signals are indicative of a reflected flare upon determining that the parameter associated with the one or more ADC signals satisfies each of the plurality of threshold conditions determined.

6. The flame detection system of claim 4, wherein the at least one processor is configured to determine whether the one or more ADC signals are indicative of a flame upon determining that the parameter associated with the one or more ADC signals does not satisfy the plurality of threshold conditions determined.

7. The flame detection system of claim 6, wherein the at least one processor is configured to:
generate a signal in response to a determination that the one or more ADC signals are indicative of the flame; and
transmit the signal to a communication device for alerting a user.

8. The flame detection system of claim 1, wherein the at least one processor is configured to determine the plurality of threshold conditions associated with the one or more ADC signals based at least on a flag condition associated with the one or more ADC signals.

9. The flame detection system of claim 8, wherein the flag condition corresponds to the one or more ADC signals received by the at least one processor having one or more fluctuations and modulations within a period of time.

10. The flame detection system of claim 1, wherein the at least one flame detector corresponds to at least one of infrared (IR) sensors, photodiodes, or a combination of the IR sensors and the photodiodes.

11. A method comprising:
receiving, via at least one processor, one or more analog to digital converted (ADC) signals corresponding to one or more radiations detected within a field of view (FOV) of at least one flame detector;
determining, via the at least one processor, a plurality of threshold conditions for a reflected flare stack associated with the one or more ADC signals;
determining, via the at least one processor, a parameter associated with the one or more ADC signals;
comparing, via the at least one processor, the parameter with the plurality of threshold conditions for the one or more ADC signals; and
determining, via the at least one processor, whether the one or more ADC signals are indicative of a flame or a reflected flare based at least on the comparison.

12. The method of claim 11, wherein the parameter corresponds to a skewness and kurtosis ratio (SK ratio) threshold of the one or more ADC signals; and
wherein the method further comprises comparing, via the at least one processor, the skewness and kurtosis ratio with each of the plurality of threshold conditions using a Kolmogorov-Smirnov Test.

13. The method of claim 11, wherein comparing the parameter with each of the plurality of threshold conditions for the one or more ADC signals to determine whether the parameter associated with the one or more ADC signals satisfies each of the plurality of threshold conditions determined.

14. The method of claim 11, further comprising:
determining, via the at least one processor, whether the one or more ADC signals are indicative of a reflected flare upon determining that the parameter associated with the one or more ADC signals satisfies each of the plurality of threshold conditions determined;
determining, via the at least one processor, whether the one or more ADC signals are indicative of a flame upon determining that the parameter associated with the one or more ADC signals does not satisfy the plurality of threshold conditions determined;
generating, via the at least one processor, a signal in response to a determination that the one or more ADC signals are indicative of the flame; and
transmitting, via the at least one processor, the signal to a communication device for alerting a user.

15. The method of claim 11, further comprising determining, via the at least one processor, the plurality of threshold conditions associated with the one or more ADC signals based at least on a flag condition associated with the one or more ADC signals;
wherein the flag condition corresponds to the one or more ADC signals received by the at least one processor having one or more fluctuations and modulations within a period of time.
